# EUROPEAN PATENT APPLICATION

(11) **EP 1 898 353 A2**
(43) Date of publication of application: **12.03.2008**
(21) Application number: 07016752.3
(22) Date of filing: 27.08.2007
(51) Int. Cl.: G06T 3/40

(54) **Frame interpolating circuit, frame interpolating method, and display apparatus**

(30) Priority: 08.09.2006 JP 2006244729
(71) Applicant: Kabushiki Kaisha Toshiba, Minato-ku, Tokyo 105-8001 (JP)
(72) Inventor: Yoshimura, Hiroshi, Tokyo 105-8001 (JP)
(74) Representative: HOFFMANN EITLE

(57) **Abstract**

According to one embodiment, there is provided a frame interpolating circuit including a detecting unit (21, 22) which detects a first frame image (F1) and a second frame image (F2) from an input image signal (I₁) and compares both the images with each other to detect a plurality of motion vectors (V₁₁ to V₅₅) in a plurality of blocks obtained by dividing the frame into blocks, a filter unit (23) which selects, of motion vectors in an upper block of one block and motion vectors in a right block of the one block, a motion vector having a vector value which is close to the values of the motion vectors and changes the values of the motion vectors in the one block into a value which is different from the value of the motion vector by a predetermined value (step), and an interpolated frame generating unit (13) which generates and outputs an interpolated image (F3) on the basis of the plurality of motion vectors (V₁₁' to V₅₅') the values of which are changed and the first frame image and the second frame image.

## Description

One embodiment of the invention relates to a frame interpolating circuit and a frame interpolating method which detect and use a motion vector, and a display apparatus using the frame interpolating circuit and the frame interpolating method.

In recent years, with development of a digital video technique, a demand for high image quality and high quality of a video has been high. In accordance with this, a frame interpolating process which generates and adds an interpolated image to each frame image of the video to more smoothly and naturally express motion of the video is known. In the frame interpolating process, block motion vectors of an image are detected, and an interpolated image is generated depending on the degrees of motion of the motion vectors. However, when a distribution of the motion vectors is fluctuated, an image which is a result of the interpolating process is broken consequently.

Patent Document 1 (Jpn. Pat. Appln. KOKAI Publication No. 06-153167) discloses a motion vector detecting circuit which removes an isolated motion vector to prevent the image from being broken in the above case.

However, when an assembly having vectors which are largely different from motion vectors of a peripheral block is generated by sharp changes of the motion vectors in a frame interpolating apparatus, erroneous interpolation occurs in a large area in an interpolated image, and the image may be considerably broken.

In a method using the removal of an isolated vector as in Patent Document 1, when erroneous detection is performed by a specific assembly, motion vectors which are erroneously detected cannot be corrected.

An object of the present invention is to provide a frame interpolating circuit and a frame interpolating method which can correct an assembly having vectors which are largely different from motion vectors of a peripheral block.

One embodiment for achieving the object is a frame interpolating circuit comprising:
a detecting unit (21, 22) which detects a first frame image (F1) and a second frame image (F2) from an input image signal (I₁) and compares both the images with each other to detect a plurality of motion vectors (V₁₁ to V₅₅) in a plurality of blocks obtained by dividing the frame into blocks;
a filter unit (23) which selects, in comparison with values of motion vectors in one block of said plurality of blocks, of motion vectors in an upper block of the one block and motion vectors in a right block of the one block, a motion vector having a vector value which is close to the values of the motion vectors and changes the values of the motion vectors in the one block into a value which is different from the value of the selected motion vectors by a predetermined value (step); and
an interpolated frame generating unit (13) which generates and outputs an interpolated image (F3) on the basis of said plurality of motion vectors (V₁₁' to V₅₅') the values of which are changed by the filter unit and the first frame image and the second frame image.

In this manner, there are provided a frame interpolating circuit and a frame interpolating method which can correct an assembly of motion vectors which are largely different from motion vectors of a peripheral block.

The invention can be more fully understood from the following detailed description when taken in conjunction with the accompanying drawings, in which:
FIG. 1 is a block diagram showing an example of a configuration of a frame interpolating circuit according to an embodiment of the present invention;
FIG. 2 is a block diagram showing an example of a configuration of a motion vector detecting unit of a frame interpolating circuit according to an embodiment of the present invention;
FIG. 3 is a diagram for explaining an example of uncorrected motion vectors and corrected motion vectors in a frame interpolating circuit according to an embodiment of the present invention;
FIG. 4 is a flow chart showing an example of a vector correcting process which refers only to an upper vector in a frame interpolating circuit according to an embodiment of the present invention;
FIG. 5 is a diagram for explaining an example of a vector correcting process which refers only to an upper vector in a fame interpolating circuit according to an embodiment of the present invention;
FIG. 6 is a flow chart showing an example of a vector corresponding process which refers only to a left vector in a frame interpolating circuit according to an embodiment of the present invention;
FIG. 7 is a flow chart showing an example of a vector corresponding process which refers to one of an upper vector and a left vector in a frame interpolating circuit according to an embodiment of the present invention;
FIG. 8 is a diagram showing an example of a vector corresponding process which refers to one of an upper vector and a left vector in a frame interpolating circuit according to an embodiment of the present invention;
FIG. 9 is a diagram for explaining vector values showing a concrete example of a vector correcting process performed by a frame interpolating circuit according to an embodiment of the present invention; and
FIG. 10 is a block diagram showing an example of a configuration of a display apparatus including a frame interpolating circuit according to an embodiment of the present invention.

An embodiment of the present invention provides a frame interpolating circuit and a frame interpolating method which can correct an assembly having vectors which are considerably different from motion vectors of a peripheral block.

One embodiment for achieving the object is a frame interpolating circuit comprising:
a detecting unit (21, 22) which detects a first frame image (F1) and a second frame image (F2) from an input image signal (I₁) and compares both the images with each other to detect a plurality of motion vectors (V₁₁ to V₅₅) in a plurality of blocks obtained by dividing the frame into blocks;
a filter unit (23) which selects, in comparison with values of motion vectors in one block of said plurality of blocks, of motion vectors in an upper block of the one block and motion vectors in a right block of the one block, a motion vector having a vector value which is close to the values of the motion vectors and changes the values of the motion vectors in the one block into a value which is different from the value of the selected motion vectors by a predetermined value (step); and
an interpolated frame generating unit (13) which generates and outputs an interpolated image (F3) on the basis of said plurality of motion vectors (V₁₁' to V₅₅') the values of which are changed by the filter unit and the first frame image and the second frame image.

In this manner, there are provided a frame interpolating circuit and a frame interpolating method which can correct an assembly of motion vectors which are considerably different from motion vectors of a peripheral block.

The embodiment of the present invention will be described below in detail with reference to the accompanying drawings.

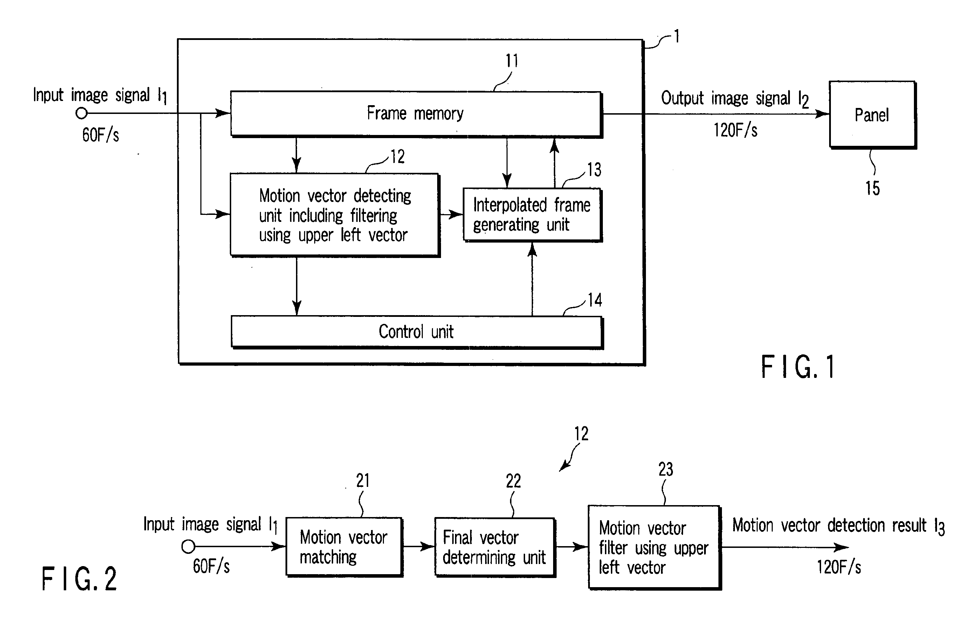

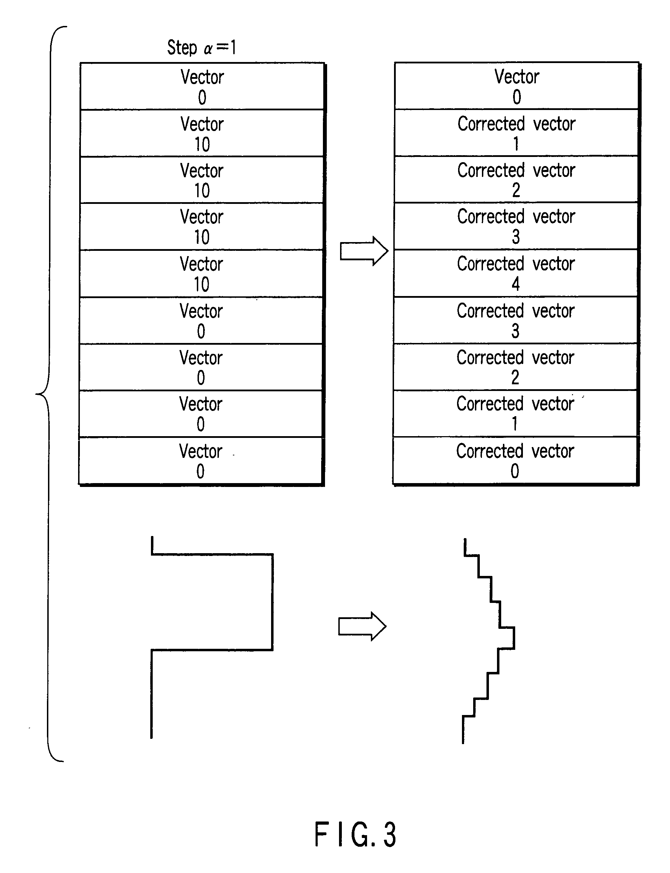

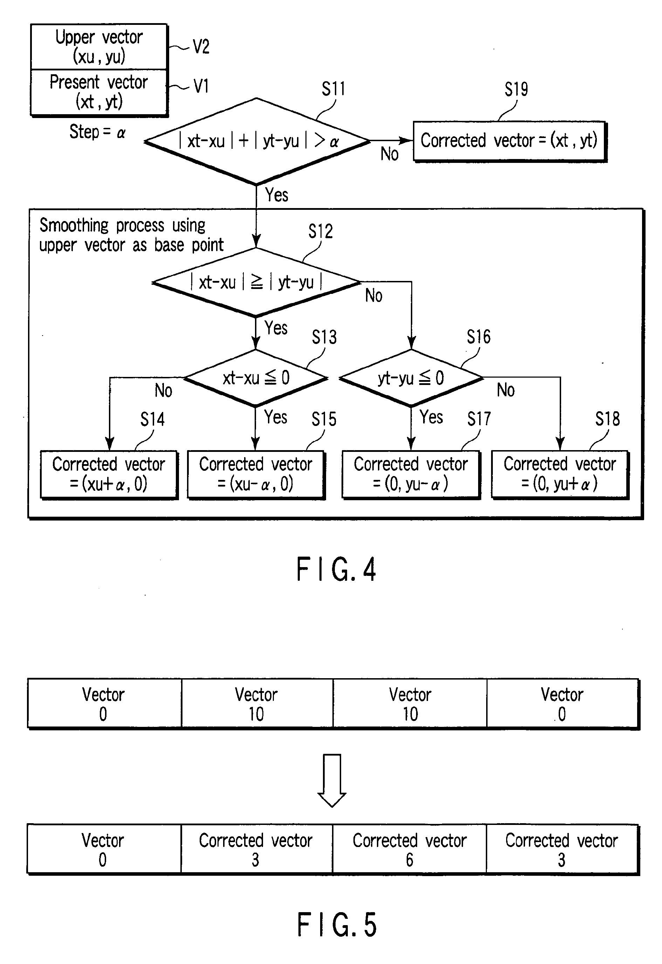

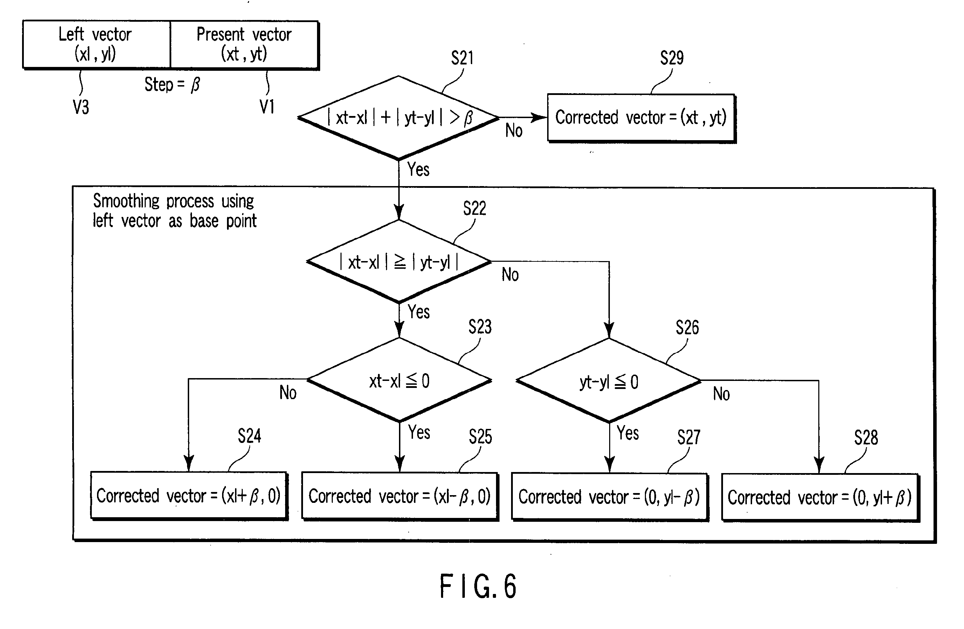

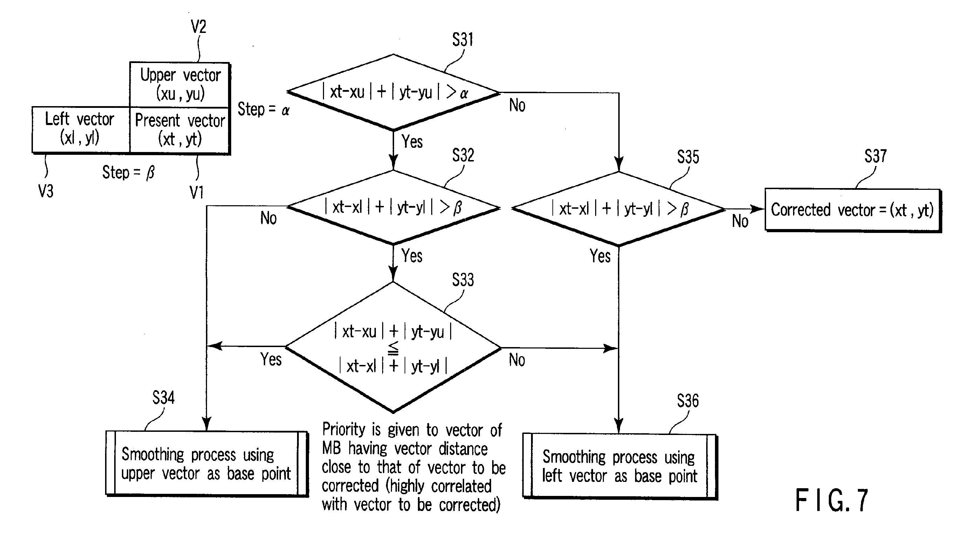

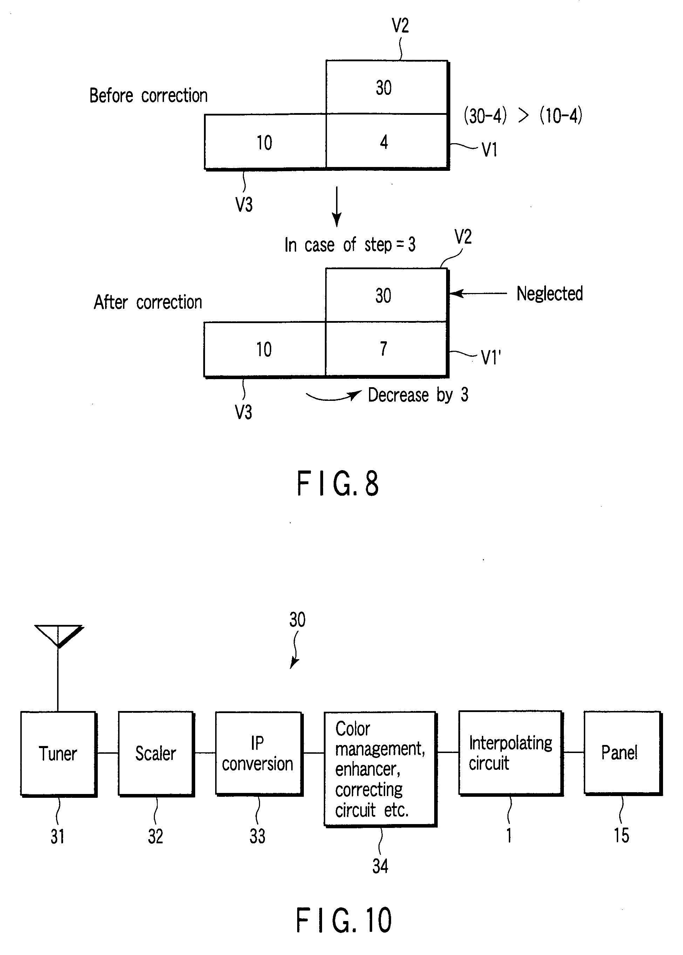

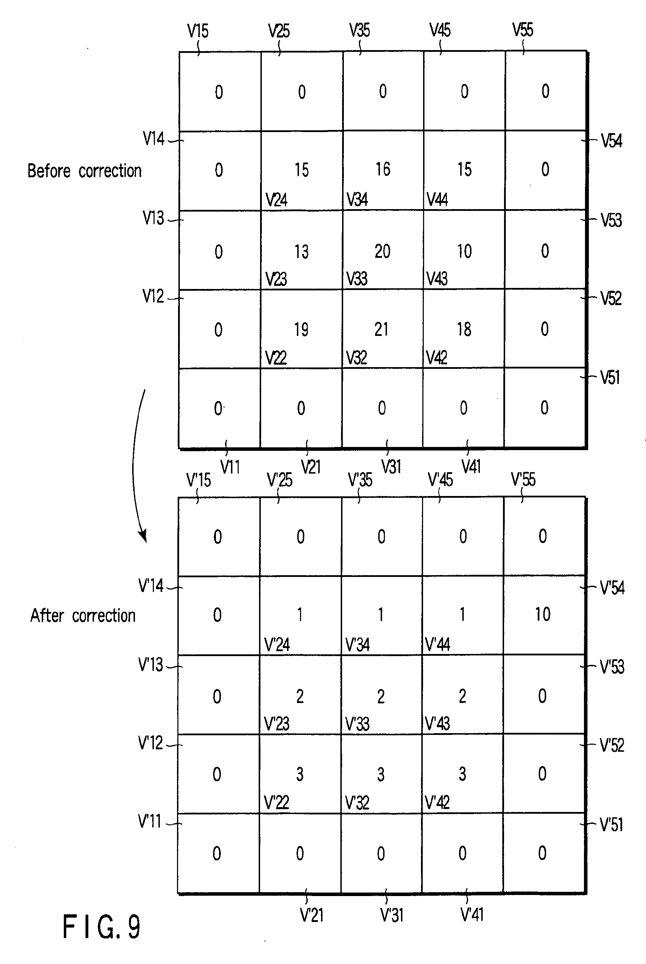

FIG. 1 is a block diagram showing an example of a configuration of a frame interpolating circuit according to an embodiment of the present invention. FIG. 2 is a block diagram showing an example of a configuration of a motion vector detecting unit of a frame interpolating circuit according to an embodiment of the present invention. FIG. 3 is a diagram for explaining an example of uncorrected motion vectors and corrected motion vectors in a frame interpolating circuit according to an embodiment of the present invention. FIG. 4 is a flow chart showing an example of a vector correcting process which refers only to an upper vector in a frame interpolating circuit according to an embodiment of the present invention. FIG. 5 is a diagram for explaining an example of a vector correcting process which refers only to an upper vector in a fame interpolating circuit according to an embodiment of the present invention. FIG. 6 is a flow chart showing an example of a vector corresponding process which refers only to a left vector in a frame interpolating circuit according to an embodiment of the present invention. FIG. 7 is a flow chart showing an example of a vector corresponding process which refers to one of an upper vector and a left vector in a frame interpolating circuit according to an embodiment of the present invention. FIG. 8 is a flow chart showing an example of a vector corresponding process which refers to one of an upper vector and a left vector in a frame interpolating circuit according to an embodiment of the present invention. FIG. 9 is a diagram for explaining vector values showing a concrete example of a vector correcting process performed by a frame interpolating circuit according to an embodiment of the present invention. FIG. 10 is a block diagram showing an example of a configuration of a display apparatus including a frame interpolating circuit according to an embodiment of the present invention.

### <Frame Interpolating Circuit according to One Embodiment of the Present Invention>

### (Configuration and Basic Operation)

First, an example of a frame interpolating circuit according to an embodiment of the present invention will be described below with reference to FIG. 1. A frame interpolating circuit 1, in FIG. 1, for example, has a frame memory 11 which receives an input image signal I₁ having 60 frames/second of RGB standards or YCbCr standards as an example and outputs an output image signal I₂ having 120 frames/second as an example, and a motion vector detecting unit 12 which compares pixel values of a past frame (F1) and a present frame (F2) stored in the frame memory 11 to generate a motion vector by using symmetric searching, block matching, or the like and includes filtering using an upper left vector. Furthermore, the frame interpolating circuit 1 has an interpolated frame generating unit 13 which generates an interpolated frame (F3) on the basis of the past frame (F1) and the present frame (F2) from the motion vector detecting unit 12 and the motion vector generated by the motion vector detecting unit 12, and a control unit 14 which controls an entire operation as will be described below.

The motion vector detecting unit 12, as shown in FIG. 2, has a motion vector matching unit 21, a final vector determining unit 22, and a motion vector filter unit 23 using the upper left vector.

A basic operation of the frame interpolating circuit will be described below in detail.

By the operations of the control unit 14, the motion vector matching unit 21 and the final vector determining unit 22 in the motion vector detecting unit 12 including filtering using the upper left vector, and on the basis of the past frame image (F1) and the present frame image (F2) from the input image signal (I₁), motion vectors V₁₁ to V₅₅ as obtained before correction in FIG. 9 are detected. A filtering process of the motion vector filter unit 23 using the upper left vector is performed by procedures described later.

Upon receiving the motion vectors V₁₁ to V₅₅ from the motion vector detecting unit 12 including filtering using the upper left vector, the interpolated frame generating unit 13 generates the interpolated image (F3) on the basis of the past frame image (F1) and the present frame image (F2) from the input image signal (I₁) to output the past frame image (F1), the interpolated image (F3), and the present frame image (F2) to the subsequent part in the order named. In this manner, even though a video image includes large motion, for example, a smooth and natural video image free from breakdown can be displayed on a panel display unit.

### (Operation including Filtering Process)

A filtering process to correct an assembly of motion vectors, such as the uncorrected motion vectors V₁₁ to V₅₅ as shown in FIG. 9, which are considerably different from motion vectors of a peripheral block, will be described below in detail by using the flow charts or the like shown in FIGS. 3 to 8. Steps in the flow charts in FIGS. 4, 6, and 7 can be replaced with circuit blocks, respectively. Therefore, all the steps in the flow charts can be redefined as blocks, respectively.

### Filtering Process using Upper Vector

· First, a principle of a filtering process using an upper vector will be described below with reference to FIG. 3. In FIG. 3, as motion vectors, an upper vector having 0 of an x component is set, subsequent present blocks 10, 10, 10, and 10 are set, and blocks having 0 as x components are set. A part of the motion vectors 10 is a part having a high probability of erroneous detection.

When a filtering process according to an embodiment of the present invention is performed to the motion vectors by using the motion vector filter 23, in a part in which the upper vector having a value of 0 changes into the present vector having a value of 10, a smoothing process is performed in a specific step α (example: α = 1). More specifically, the present vector has "1" obtained by adding step α = 1 to the upper vector having a value of 0.

The corrected present vector is circulated, and "2" obtained by adding step α to "1" is the value of the next present vector. The vector value is gradually changed into "3", "4", "3", "2", and "1". When the process is performed in this manner, a video image is not broken because the vector is prevented from being sharply changed.

As the value of the step α, "1", "2", "3", or the like can be properly set.

A concrete example of the filtering process using the upper vector will be described below in detail by using the flow chart in FIG. 4. First, when a plurality of motion vectors in the plurality of blocks are received from the final vector determining unit 22, one of the present vectors, i.e., the vector V1 is compared with an upper vector V2 (step S11). When the value falls within a range given by step value = α (α is a constant such as 1), a correction vector = (xt, yt) is set, and a filtering process of the vectors is not performed (step S19).

However, when a comparison result between the present vector V1 and the upper vector V2 exceeds step value = α, a smoothing process using the upper vector as a base point is performed to calculate the values of both the vectors (step S12). When |xt - xu| ≥ |yt - yu| is satisfied, it is asked whether xt - xu ≤ 0 is satisfied (step S13). If YES in step S13, a correction vector = (xu - α,0) is satisfied (step S15), otherwise, the correction vector = (xu + α,0) is satisfied (step S14).

When |xt - xu| < |yt - yu| is satisfied, it is asked next whether yt - yu ≤ 0 is satisfied (step S16). When YES in step S16, the correction vector = (0,yu - α) is satisfied (step S17), otherwise, the correction vector = (0,yu + α) is satisfied (step S18).

In this manner, the filtering process is performed to one present vector V1 in the frame. The filtering process is preferably performed to the motion vectors in all the blocks in the frame.

### · Filtering Process using Left Vector

A filtering process using a left vector will be described below with reference to FIG. 5. Operations to be performed are the same as those in the filtering process using the upper vector shown in FIG. 3.

As values of present vectors, 0, 10, 10, and 0 obtained before the process are changed into 0, 3, 6, and 3 by the process, respectively. It is understood that the smoothing process is performed along the left vector. In this manner, an assembly having vectors which are considerably different from motion vectors in a peripheral block can be corrected.

A concrete example of the filtering process using the left vector will be described below in detail with reference to the flow chart in FIG. 6. First, when a plurality of motion vectors in a plurality of blocks are received from the final vector determining unit 22, one of the motion vectors, i.e., a present vector V1 is compared with a left vector V3 (step S21). When the value falls within a range given by step value = β (β is a constant such as 1), a correction vector = (xt, yt) is set, and a filtering process of the vectors is not performed (step S29).

However, when the comparison result between the present vector V1 and the left vector V3 exceeds step value = β, a smoothing process using the left vector as a base point is performed to calculate the values of both the vectors (step S22). When |xt - xl| ≥ |yt - yl| is satisfied, it is asked whether xt - xl ≤ 0 is satisfied (step S23). If YES in step S23, a correction vector = (xl - β,0) is satisfied (step S25), otherwise, the correction vector = (xl + β,0) is satisfied (step S24).

When |xt - xu| |< |yt - yu| is satisfied in step S22, it is asked next whether yt - yl ≤ 0 is satisfied (step S26). When YES in step S26, the correction vector = (0, yl - β) is satisfied (step S27), otherwise, the correction vector = (0,yl + β) is satisfied (step S28).

In this manner, the filtering process is performed to one present vector V1 in the frame. The filtering process is preferably performed to the motion vectors in all the blocks in the frame.

### Filtering Process using Upper Left Vector

A concrete example of the filtering process using the upper left vector will be described below in detail with reference to the flow chart in FIG. 7. First, when a plurality of motion vectors in a plurality of blocks are received from the final vector determining unit 22, one of the motion vectors, i.e., a present vector V1 is compared with an upper vector V2 (step S31). When the value falls within a range given by step value = α (α is a constant such as 1), the present vector V1 and the left vector V3 are compared with each other (step S35). When a comparison result falls within a range given by step value = β (β is a constant such as 1), a correction vector = (xt, yt) is set, and a filtering process of the vectors is not performed (step S37).

However, when a comparison result between the present vector V1 and the upper vector V2 exceeds step value = α, the present vector V1 and the left vector V3 are compared with each other (step S35), and it is determined whether the comparison result falls within a range given by the step value = β (β is a constant such as 1) (step S32). When the comparison result between the present vector V1 and the left vector V3 falls within the range given by the step value = β (β is a constant such as 1), a smoothing process using the upper vector shown in FIG. 4 as a base point is performed (step S34).

When the comparison result between the present vector V1 and the left vector V3 exceeds the step value = β (β is a constant such as 1) in step S35, a smoothing process using the left vector shown in FIG. 6 as a base point is performed (step S36).

When the comparison result between the present vector V1 and the left vector V3 exceeds the range given by the step value = β (β is a constant such as 1) in step 32, it is asked whether |xt - xu| + |yt - yu| ≤ |xt - xl| + |yt - yl| is satisfied (step S33). When YES in step S32 and the value of the present vector V1 is close to the value of the upper vector V2, a smoothing process using the upper vector shown in FIG. 4 as a base point is performed (step S34).

When the value of the present vector V1 is close to the value of the left vector V3 in step S33, a smoothing process using the left vector shown in FIG. 6 as a base point is performed (step S36).

In this manner, the filtering process of one of the vectors in the frame, i.e., the present vector V1 is performed. However, the filtering process is preferably performed to the motion vectors in all the blocks in the frame.

As described above, according to the filtering process which is an embodiment of the present invention, a present vector is filtered with reference to vectors in an upper block and a left block to make it possible to suppress vectors from being sharply changed and to correct vector erroneous detection with a certain degree of assembly. Therefore, breakdown of an interpolated image caused by sharp changes of vectors can be reduced.

### · Concrete Example 1 of Filtering Process using Upper Left Vector

Concrete Example 1 of the filtering process using the upper left vector will be described below with reference to FIG. 8.

In FIG. 8, when the value of the uncorrected present vector V1 is "4", the value of the upper vector V2 is "30", and the value of the left vector V3 is "10", (30 - 4) > (10 - 4) is satisfied, the upper vector V2 is neglected, and a smoothing process using the left vector V3 as a base point is performed. In this case, when α = 3, the value of the left vector V3 is "10". For this reason, the value of the present vector V1 is given by "10 - 3 = 7".

### · Concrete Example 2 of Filtering Process using Upper Left Vector

Concrete Example 2 of the filtering process using the upper left vector will be described below with reference to FIG. 9.

A plurality of uncorrected vectors V₁₁ to V₅₁, especially, the vectors V₂₄, V₃₄, V₄₄, V₂₃, V₃₃, V₄₃, V₂₂, V₃₂, and V₄₂ supplied from the final vector determining unit 22 form an assembly of motion vectors which are largely different from motion vectors of a peripheral block.

However, the vectors V₂₄, V₃₄, V₄₄, V₂₃, V₃₃, V₄₃, V₂₂, V₃₂, and V₄₂ are changed into vectors V₂₄', V₃₄', V₄₄', V₂₃', V₃₃', V₄₃', V₂₂', V₃₂', and V₄₂', respectively, by the filtering process using the upper left vector as shown in FIG. 7. The assembly having vectors which are considerably different from the motion vectors of a peripheral block can be corrected. In this manner, an interpolated image can be avoided from being broken by sharp changes of the vectors.

The filtering processes using the upper, left, and upper left vectors have been described above. However, a filtering process can be similarly performed by the same principle by using any one of the upper, lower, left, and right vectors.

### <Panel Display Apparatus using Frame Interpolating Circuit according to One Embodiment of the Present Invention>

An example of a panel display apparatus using the frame interpolating circuit described above will be described below in detail with reference to FIG. 10.

A panel display apparatus 30 using the frame interpolating circuit 1 has, an example, a tuner unit 31 which outputs a broadcast signal as a video signal, a scaler 32 which performs a scaling process for the video signal, an IP converting unit 33 which performs IP conversion to the video signal, a processing unit 34 including color management, enhancer, and correcting circuits and the like, the frame interpolating circuit 1 described above, and a panel unit 15 such as a liquid crystal display unit or an FPD (Flat Panel Display) which receives an output from the frame interpolating circuit 1.

The panel display apparatus 30 having such a configuration can cause the frame interpolating circuit 1 to correct an assembly having vectors which are considerably different from motion vectors of a peripheral block as described above. A smooth and natural video image can be displayed by using an interpolated frame having an unbroken video image.

According to the embodiments described above, a person skilled in the art can realize the present invention. Furthermore, the person skilled in the art can easily conceive of various modifications of the embodiments and can apply the present invention to various embodiments without inventive ability. Therefore, the present invention covers wide ranges consistent with the disclosed principle and the novel characteristics, and is not limited to the embodiments described above.

## Claims

1. A frame interpolating circuit **characterized by** comprising:
a detecting unit (21, 22) which detects a first frame image (F1) and a second frame image (F2) from an input image signal (I₁) and compares both the images with each other to detect a plurality of motion vectors (V₁₁ to V₅₅) in a plurality of blocks obtained by dividing the frame into blocks;
a filter unit (23) which selects, in comparison with values of motion vectors in one block of said plurality of blocks, of motion vectors in an upper block of the one block and motion vectors in a right block of the one block, a motion vector having a vector value which is close to the values of the motion vectors and changes the values of the motion vectors in the one block into a value which is different from the value of the selected motion vectors by a predetermined value (step); and
an interpolated frame generating unit (13) which generates and outputs an interpolated image (F3) on the basis of said plurality of motion vectors (V₁₁' to V₅₅') the values of which are changed by the filter unit and the first frame image and the second frame image.

2. The frame interpolating circuit according to claim 1, **characterized in that** the filter unit changes the values of the motion vectors in the one block to the value which is different from the value of the selected motion vector by the predetermined value (step) with respect to all of said plurality of motion vectors of said plurality of blocks in the frame.

3. The frame interpolating circuit according to claim 1, **characterized in that** the detecting unit performs block matching between the first frame image and the second frame image to detect the motion vector.

4. The frame interpolating circuit according to claim 1, **characterized in that** the input image signal is of one of RGB and YCbCr standards.

5. A frame interpolating method **characterized by** comprising:
detecting a first frame image (F1) and a second frame image (F2) from an input image signal (I₁) and comparing both the images with each other to detect a plurality of motion vectors (V₁₁ to V₅₅) in a plurality of blocks obtained by dividing the frame into blocks;
selecting, in comparison with values of motion vectors in one block of said plurality of blocks, of motion vectors in an upper block of the one block and motion vectors in a right block of the one block, a motion vector having a vector value which is close to the values of the motion vectors and changing the values of the motion vectors in the one block into a value which is different from the value of the selected motion vectors by a predetermined value (step); and
generating and outputting an interpolated image (F3) on the basis of said plurality of motion vectors (V₁₁' to V₅₅') the values of which are changed and the first frame image and the second frame image.

6. The frame interpolating method according to claim 5, **characterized in that** the values of the motion vectors in the one block are changed to the value which is different from the value of the selected motion vector by the predetermined value (step) with respect to all of said plurality of motion vectors of said plurality of blocks in the frame.

7. The frame interpolating method according to claim 5, **characterized in that** block matching between the first frame image and the second frame image is performed to detect the motion vector.

8. The frame interpolating method according to claim 5, **characterized in that** the input image signal is of one of RGB and YCbCr standards.

9. A display apparatus **characterized by** comprising:
a detecting unit (21, 22) which detects a first frame image (F1) and a second frame image (F2) from an input image signal (I₁) and compares both the images with each other to detect a plurality of motion vectors (V₁₁ to V₅₅) in a plurality of blocks obtained by dividing the frame into blocks;
a filter unit (23) which selects, in comparison with values of motion vectors in one block of the plurality of blocks, of motion vectors in an upper block of the one block and motion vectors in a right block of the one block, a motion vector having a vector value which is close to the values of the motion vectors and changes the values of the motion vectors in the one block into a value which is different from the value of the selected motion vectors by a predetermined value (step);
an interpolated frame generating unit (13) which generates and outputs an interpolated image (F3) on the basis of said plurality of motion vectors (V₁₁' to V₅₅') the values of which are changed by the filter unit and the first frame image and the second frame image;
a panel unit which displays the first and second frame images (F1, F2) and the interpolated image (G3) on a screen.

10. The display apparatus according to claim 9, **characterized in that** block matching between the first frame image and second frame image is performed to detect the motion vector.
